# EUROPEAN PATENT APPLICATION

(11) **EP 2 226 351 A1**
(43) Date of publication of application: **08.09.2010**
(21) Application number: 08869175.3
(22) Date of filing: 22.12.2008
(51) Int. Cl.: C08J 5/18, B32B 27/36, G02B 5/30

(54) **POLYESTER FILM FOR RELEASE FILM FOR POLARIZER AND LAYERED PRODUCT WITH IMPROVED POLARIZING PROPERTY**

(30) Priority: 28.12.2007 JP 2007338953; 28.12.2007 JP 2007338970; 28.12.2007 JP 2007339023; 28.12.2007 JP 2007339101; 28.12.2007 JP 2007339209
(71) Applicant: Mitsubishi Plastics, Inc., Tokyo 103-0021 (JP)
(72) Inventor: SUZUKI, Kanae, Maibara-shi Shiga 521-0234 (JP)
(74) Representative: Merkle, Gebhard
(86) International application number: PCT/JP2008/003890
(87) International publication number: WO 2009/084180

(57) **Abstract**

The present invention provides a polyester film suitable as a base film in a release film which is capable of realizing a high inspection accuracy when a polarizing plate laminated with the release film is subjected to visual inspection using a Cross-Nicol method for detecting defects such as distortion and unevenness or inclusion of foreign matters therein. The polyester film for a release film for a polarizing plate according to the present invention has a haze of 7 to 18% and an L value of not more than 77 as measured by a reflection method.

## Description

### TECHNICAL FIELD

The present invention relates to a polyester film for a release film for a polarizing plate and a laminate having improved polarization characteristics, and more particularly, to a polyester film for a release film for a polarizing plate having excellent optical properties and a high-accuracy detectability of defects of the polarizing plate upon subjected to a film inspection which are important characteristics of films used in the applications such as liquid crystal displays, as well as a laminate which is capable of exhibiting improved polarization characteristics by using the polyester film for a release film for a polarizing plate therein.

### BACKGROUND ART

Polyester films typically comprising polyethylene terephthalate or polyethylene naphthalate have been extensively used in various applications because of excellent properties such as mechanical strength, dimensional stability, flatness, heat resistance, chemical resistance and optical characteristics as well as excellent cost performance. However, with a recent tendency that the polyester films are processed and used under various conditions owing to the increase in their application fields, there tends to arise such a problem that when used in a release film for a polarizing plate, an inspection accuracy of the polarizing plate upon inspection for detection of foreign matters therein is deteriorated by formation of luminescent spots due to particulate components in the release film, etc.

With the recent rapid spread of mobile phones and personal computers, there is remarkably caused an increasing demand for liquid crystal displays (LCD) which are capable of realizing reduction in thickness and weight, low power consumption and a high image quality as compared to CRT as displays of a conventional type. Also, the progress of techniques for enlarging an image screen of LCD also becomes remarkable. The LCD having a large-size image screen has been recently used, for example, in large TVs having a size of 30 inches or more. In the LCD having such a large image screen, in many cases, a brightness of a backlight incorporated into LCD unit is enhanced, or a film capable of improving a brightness of LCD is incorporated into the LCD unit to obtain the LCD having both a large image screen and a high brightness.

In the LCD of such a high-brightness type, small luminescent spots being present in the display tend to frequently cause significant problems. In constitutional members incorporated in the high-brightness type LCD such as a polarizing plate, a retardation plate (phase difference plate) and a retarded polarizing plate, even fine foreign matters causing no problem in the conventional low-brightness type LCD tend to become problematic. Therefore, it is important to not only prevent foreign matters from being included into the LCD during the production process, but also improve an inspection accuracy therefor so as to surely detect defects owing to the foreign matters included therein even when inclusion of the foreign matters occurs unexpectedly.

Hitherto, particles have been usually incorporated into the polyester film to ensure a good slip property and a good winding property of the film. In this case, if the particles do not have an appropriate particle size and are not blended in an adequate amount, the resulting polyester film may fail to ensure a desired slip property or tends to be deteriorated in winding property, resulting in poor productivity of the film. However, as described above, in the case where the particles have an ordinary particle size and are blended in an ordinary amount, there tends to occur such a problem that when the polyester film is used in a release film for a polarizing plate, an inspection accuracy of the polarizing plate is deteriorated owing to luminescent spots formed by the particles upon subjected to the inspection for detection of foreign matters therein.

For example, the inspection for detection of defects in the polarizing plate is generally carried out by visual inspection using a Cross-Nicol method. Further, the polarizing plate used for large TVs having a size of 40 inches or more has also been inspected by an automatic foreign matter inspection apparatus using a Cross-Nicol method. The Cross-Nicol method is carried out in such a manner in which two polarizing plates are disposed such that orientation main axes thereof are perpendicular to each other to keep them in a quenching state, and when any foreign matters or defects are present, luminescent spots appear at the positions, thereby enabling visual defect inspection thereof or automatic defect inspection using a line sensor camera, etc. In this case, the respective polarizing plates are usually provided with an adhesive layer on which a polyester film with a release layer as a release film is laminated. When inspecting the product having the above structure, the Cross-Nicol inspection is carried out under such a condition that the release polyester film is sandwiched between the two polarizing plates. However, in general, when the release polyester film is used as described above, foreign matters or defects in the polarizing plate tend to be hardly detected by the inspection using the Cross-Nicol method, thereby causing such a problem that the foreign matters or defects are likely to be overlooked.

In consequence, there have been proposed a laminate having a structure including an adhesive layer provided on one surface of a polarizing plate, a retarded polarizing plate or a retardation plate, and a release film laminated on a surface of the adhesive layer, which has an excellent polarization characteristics and readily undergoes a visual foreign matter inspection, as well as a release film used therefor (refer to Patent Document 1). More specifically, the laminate and the release film are as follows.

### <Laminate having improved polarization characteristics>

A laminate having improved polarization characteristics, in which an adhesive layer is formed on one surface of a polarizing plate, a retarded polarizing plate or a retardation plate and a release film having a transparent biaxially oriented aromatic polyester film as a base film is formed on the surface of the adhesive layer, in which the laminate is configured such that (1) a direction of an orientation main axis of the biaxially oriented aromatic polyester film in the release film as measured by a microwave transmission-type molecular orientation meter, and (2) a direction of an orientation axis of the polarizing plate, the retarded polarizing plate or the retardation plate are substantially the same or substantially form an angle of 90°.

### <Release film>

A release film for inspection of a polarizing plate, a retarded polarizing plate or a retardation plate, which release film consists essentially of a transparent biaxially oriented aromatic polyester base film at least one surface of which is coated with a silicone resin to impart a releasing property thereto, the biaxially oriented aromatic polyester film having a MOR value of 1.3 to 1.8 as measured by a microwave transmission type molecular orientation meter. In addition, according to the preferred embodiment of the release film, a difference between a maximum value and a minimum value of the MOR value in the biaxially oriented aromatic polyester film is 0.2 or less, and the biaxially oriented polyester film has a retardation (R) value of at least 1,200 nm.

Patent Document 1: Japanese Patent Application Laid-Open (KOKAI) No. 7-101026

However, even when using the above conventional methods for inspecting products of a recent level required to have a high quality, the inspection accuracy tends to be still unsatisfactory to carry out the inspection for surely detecting defects. In addition, in the case where the polarizing plate is inspected to detect detects thereof such as distortion and unevenness, the inspection may be sometimes carried out by reflection visual inspection method under a fluorescent lamp. In this case, the polarizing plate is inspected through a release film overlaid on the polarizing plate. Therefore, if the release film is extremely white, the defects of the polarizing plate tend to be hardly seen therethrough, thereby causing such a problem that these defects are likely to be overlooked.

### DISCLOSURE OF THE INVENTION

### Problems to be Solved by the Invention

The present invention has been made to solve the above problems. An object of the present invention is to provide a polyester film for a release film which is capable of realizing inspection of a polarizing plate with a high accuracy when the polarizing plate is inspected by a Cross-Nicol method.

### Means for Solving Problems

As a result of the present inventors' earnest study in view of the above problems, it has been found that the polyester film having a specific structure is suitably used, in particular, as a polyester film for a release film, without any damage to its excellent film properties. The present invention has been attained on the basis of this finding. The present invention includes a group of inventions, and the aspects of the respective inventions are as follows.

That is, in a first aspect of the present invention, there is provided a polyester film for a release film for a polarizing plate, having a haze of 7 to 18% and an L value of not more than 77 as measured by a reflection method. In a second aspect of the present invention, there is provided a laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90°therebetween; and (2) the biaxially oriented polyester film in the release film has a haze of 7 to 18% and an L value of not more than 77 as measured by a reflection method.

In a third aspect of the present invention, there is provided a polyester film for a release film for a polarizing plate, having a surface roughness (Ra) of 11 to 25 nm and an image clarity value of not less than 90%. In a fourth aspect of the present invention, there is provided a laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has a surface roughness (Ra) of 11 to 25 nm and an image clarity value of not less than 90%.

In a fifth aspect of the present invention, there is provided a polyester film for a release film for a polarizing plate, having an L value of 65 to 77 as measured by a reflection method, and an image clarity value of not less than 90%. In a sixth aspect of the present invention, there is provided a laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has an L value of 65 to 77 as measured by a reflection method, and an image clarity value of not less than 90%.

In a seventh aspect of the present invention, there is provided a polyester film for a release film for a polarizing plate, having an L value of 65 to 77 as measured by a reflection method, and a surface roughness (Ra) of 11 to 25 nm. In an eighth aspect of the present invention, there is provided a laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90°therebetween; and (2) the biaxially oriented polyester film in the release film has an L value of 65 to 77 as measured by a reflection method, and a surface roughness (Ra) of 11 to 25 nm.

In a ninth aspect of the present invention, there is provided a polyester film for a release film for a polarizing plate, having a haze of 7 to 18% and an image clarity value of not less than 90%. In a tenth aspect of the present invention, there is provided a laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has a haze of 7 to 18% and an image clarity value of not less than 90%.

The present invention is described in detail below.
First, the relationship between the polyester film for a release film for a polarizing plate according to the present invention and the laminate having improved polarization characteristics according to the present invention is explained.

The polyester film for a release film for a polarizing plate according to the present invention can be suitably used in the same manner as the release film in the laminate having improved polarization characteristics as described in Japanese Patent Application Laid-Open (KOKAI) No. 7-101026. The above laminate has the following basic construction.
That is, the laminate comprises a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween.

The laminate according to the present invention is the same as the laminate having improved polarization characteristics as described in Japanese Patent Application Laid-Open (KOKAI) No. 7-101026 except for using the polyester film for a release film according to the present invention therein. Therefore, in the laminate having improved polarization characteristics according to the present invention, there can be employed the same elements as those described in the above Japanese Patent Application except for the polyester film for a release film, i.e., there can be employed the same polarizing plate or retarded polarizing plate, visual field-increasing film and the like as those described in the above Japanese Patent Application. Therefore, in the followings, the polyester film for a release film for a polarizing plate as a feature of the present invention is explained.

The polyester film described in the present invention is in the form of a film obtained by cooling a molten polyester sheet melt-extruded from an extrusion mouth by a so-called extrusion method, if required, followed by subjecting the sheet to stretching and heat treatments.

A polyester forming the film of the present invention is obtained by polycondensing an aromatic dicarboxylic acid with an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexane dimethanol. Typical examples of the polyester include polyethylene terephthalate (PET) and polyethylene-2,6-naphthalenedicarboxylate (PEN). The polyester used may be in the form of either a homopolyester or a copolyester. The copolyester may be in the form of a copolymer comprising a third component in an amount of not more than 30 mol%.
Examples of the dicarboxylic acid component of such a copolyester include one kind or two or more kinds of acids selected from the group consisting of isophthalic acid, phthalic acid, terephthalic acid, 2,6-naphthalenedicarboxylic acid, adipic acid, sebacic acid and oxycarboxylic acids such as p-oxybenzoic acid. Examples of the glycol component of the copolyester include one kind or two or more kinds of glycols selected from the group consisting of ethylene glycol, diethylene glycol, propylene glycol, butanediol, 1,4-cyclohexane dimethanol and neopentyl glycol.

The polyester obtained in the present invention may also comprise a weather-resisting agent, a light-resisting agent, an antistatic agent, a lubricant, a light-shielding agent, an antioxidant, a fluorescent brightener, a matting agent, a heat stabilizer and a colorant such as dyes and pigments unless the addition thereof adversely affects the aimed effects of the present invention.

Examples of the particles which may be incorporated in the film include fine particles of silicon oxide, alumina, calcium carbonate, kaolin and titanium oxide as well as crosslinked polymer fine particles as described in Japanese Patent Publication (KOKOKU) No. 59-5216. These particles may be used alone or in combination of any two or more kinds thereof. The content of the particles in the film is usually not more than 1% by weight, preferably 0.01 to 1% by weight and more preferably 0.02 to 0.5% by weight based on the weight of the polyester constituting the film. When the content of the particles in the film is too small, the resulting film tends to be hardly surface-roughened to an adequate extent, which results in such a tendency that the film suffers from flaws on its surface or deteriorated winding property during the film production process. On the other hand, when the content of the particles in the film is more than 1% by weight, the resulting film tends to have an excessively roughened surface, resulting in poor transparency of the film.

The particles incorporated in the polyester film have an average particle diameter of usually 0.02 to 5 µm, preferably 0.1 to 3 µm and more preferably 0.2 to 1.8 µm. When the average particle diameter of the particles incorporated in the polyester film is less than 0.02 µm, the resulting film tends to be hardly surface-roughened to an adequate extent, which results in such a tendency that the film is deteriorated in winding property during the film production process. When the average particle diameter of the particles incorporated in the polyester film is more than 5 µm, the particles tend to act as luminescent spots when they are used in a film for a release film for a polarizing plate, so that the inspection for detection of foreign matters therein may be undesirably impaired.

On the other hand, in the case of a laminated film having two or more layers, in order to improve a transparency of the film, the particles are preferably incorporated in only a surface layer thereof. In this case, the surface layer means at least one of front and rear surface layers. The particles may also be incorporated in both of the front and rear surface layers. The content of the particles in the laminated film thus formed is preferably in the range of 0.01 to 1% by weight and more preferably 0.02 to 0.6% by weight based on the weight of the polyester constituting the surface layer.

In addition, the particles used above preferably have a sharp particle size distribution. More specifically, the particle size distribution value of the particles as an index of sharpness of their particle size distribution is preferably 1.0 to 2.0. Meanwhile, the "particle size distribution value" as used herein means the value defined by d25/d75 (wherein d25 and d75 are diameters (µm) of the particles having cumulative volumes corresponding to 25% and 75% of a total volume of the particles, respectively, when the cumulative volumes are respectively calculated from a larger particle diameter side). When the particle size distribution value is more than 2.0, the particles tend to become coarse and form luminescent spots, so that the inspection for detection of foreign matters therein may also be undesirably impaired.

### <Inventions concerning the above first and second aspects>

In the first and second aspects of the present invention, the polyester film for a release film is required to have a haze of 7 to 18%. The haze of the polyester film is preferably 9 to 15%. When the haze of the polyester film is less than 7%, since it is required to reduce the content of the particles therein, the surface of the resulting film tends to be extremely flat, thereby causing such a tendency that the film is deteriorated in winding property during the film production process. When the haze of the polyester film is more than 18%, the resulting film when used as a release film for a polarizing plate tends to suffer from whitely turbid visual field upon subjected to inspection by transmitted light, so that the inspection therefor may be undesirably impaired.

The polyester film is required to have a reflection L value of not more than 77. The reflection L value of the polyester film is preferably not more than 75. When the reflection L value of the polyester film is more than 77, a reflection light from a polarizing plate with the polyester film tends to be too strong upon inspection of the polarizing plate using the reflection light, so that the inspection therefor may be undesirably impaired.

### <Inventions concerning the above third and fourth aspects>

In the third and fourth aspects of the present invention, the polyester film for a release film is required to have an image clarity value of not less than 90% as measured by the below-mentioned method. When the image clarity value of the polyester film is less than 90%, the resulting film when used as a release film for a polarizing plate tends to suffer from distortion of images upon inspection for detection of defects in the polarizing plate using a transmitted light, so that the visual inspection or automatic inspection therefor may be undesirably impaired.

Also, the polyester film is required to have a surface roughness (Ra) of 11 to 25 nm. The surface roughness (Ra) of the polyester film is preferably 11 to 22 nm. When the surface roughness (Ra) of the polyester film is more than 25 nm, the resulting film tends to be deteriorated in surface flatness and tends to be tinted whitely, so that the inspection therefor tends to be undesirably impaired. On the contrary, when he surface roughness (Ra) of the polyester film is less than 11 nm, the resulting film tends to be extremely flat, thereby causing such a tendency that the film is deteriorated in winding property during the film production process.

### <Inventions concerning the above fifth and sixth aspects>

In the fifth and sixth aspects of the present invention, the polyester film for a release film is required to have an image clarity value of not less than 90% as measured by the below-mentioned method. When the image clarity value of the polyester film is less than 90%, the resulting film when used as a release film for a polarizing plate tends to suffer from distortion of images upon inspection for detection of defects in the polarizing plate using a transmitted light, so that the visual inspection or automatic inspection therefor may be undesirably impaired.

The above polyester film is also required to have a reflection L value of 65 to 77. The reflection L value of the polyester film is preferably 65 to 75. When the reflection L value of the polyester film is more than 77, a reflection light from a polarizing plate with the polyester film tends to be too strong upon inspection of the polarizing plate using the reflection light, so that the inspection therefor may be undesirably impaired. On the contrary, when the reflection L value of the polyester film is less than 65, since the content of the particles which can be incorporated in the film must be reduced, the surface of the resulting film tends to be extremely flat, thereby causing such a tendency that the film is deteriorated in winding property during the film production process.

### <Inventions concerning the above seventh and eighth aspects>

In the seventh and eighth aspects of the present invention, the polyester film for a release film is required to have a surface roughness (Ra) of 11 to 25 nm. The surface roughness (Ra) of the polyester film is preferably 11 to 22 nm. When the surface roughness (Ra) of the polyester film is more than 25 nm, the resulting film tends to be deteriorated in surface flatness, and tends to be tinted whitely, so that the inspection therefor tends to be undesirably impaired. On the contrary, when he surface roughness (Ra) of the polyester film is less than 11 nm, the resulting film tends to be extremely flat, thereby causing such a tendency that the film is deteriorated in winding property during the film production process.

The above polyester film is also required to have a reflection L value of 65 to 77. The reflection L value of the polyester film is preferably 65 to 75. When the reflection L value of the polyester film is more than 77, a reflection light from a polarizing plate with the polyester film tends to be too strong upon inspection of the polarizing plate using the reflection light, so that the inspection therefor may be undesirably impaired. On the contrary, when the reflection L value of the polyester film is less than 65, since the content of the particles which can be incorporated in the film must be reduced, the surface of the resulting film tends to be extremely flat, thereby causing such a tendency that the film is deteriorated in winding property during the film production process.

### <Inventions concerning the above ninth and tenth aspects>

In the ninth and tenth aspects of the present invention, the polyester film for a release film is required to have an image clarity value of not less than 90% as measured by the method described in the Examples below. When the image clarity value of the polyester film is less than 90%, the resulting film when used as a release film for a polarizing plate tends to suffer from distortion of images upon inspection for detection of defects in the polarizing plate using a transmitted light, so that the visual inspection or automatic inspection therefor may be undesirably impaired.

The above polyester film is also required to have a haze of 7 to 18%. The haze of the polyester film is preferably 9 to 15%. When the haze of the polyester film is less than 7%, since it is required to reduce the content of the particles which can be incorporated in the film, the surface of the resulting film tends to be extremely flat, thereby causing such a tendency that the film is deteriorated in winding property during the film production process. When the haze of the polyester film is more than 18%, the resulting film when used as a release film for a polarizing plate tends to suffer from whitely turbid visual field upon subjected to inspection by transmitted light, so that the inspection therefor may be undesirably impaired.

In the present invention, the method for incorporating the particles into the polyester is not particularly limited, and there may be adopted any conventionally known methods. For example, the particles may be added at any optional stage of the process for producing the polyester. The particles may be added in the form of a slurry prepared by dispersing the particles in ethylene glycol, etc., preferably either at the stage of esterification or at the stage after completion of transesterification reaction and before initiation of polycondensation reaction to then allow the polycondensation reaction to proceed. Alternatively,
the particles may be incorporated in the polyester by the method of blending a slurry prepared by dispersing the particles in ethylene glycol or water with a polyester raw material using a vented kneading extruder, the method of blending the dried particles with the polyester raw material using a kneading extruder, or the like.

Meanwhile, the polyester obtained after the melt polymerization may be crushed into chips, and further subjected to solid state polymerization under reduced pressure while heating or in a flow of an inert gas such as nitrogen, if required. The thus obtained polyester preferably has an intrinsic viscosity of not less than 0.40 dl/g and more preferably 0.40 to 0.90 dl/g.

In the present invention, the polyester film may have such a laminated structure in which the polyester having a less content of oligomers is co-extruded and laminated on at least one surface of a polyester layer having an ordinary oligomer content. The polyester film for a release film according to the present invention having the above laminated structure is especially preferred, because the effect of suppressing formation of luminescent spots due to precipitation of the oligomers in the film can be highly exhibited.

In the polyester film of the present invention, the change in orientation angle in the film is preferably not more than 3°/500 mm and more preferably not more than 2°/500 mm as measured by the method described in the Examples below. When the change in orientation angle in the film is more than 3°/500 mm, the intensity of a transmitted light used for the inspection of the polarizing plate tends to vary depending upon positions on the polarizing plate, so that the stable inspection for the polarizing plate may be undesirably impaired.

The polyester film according to the present invention preferably has a refractive index (nβ) of not more than 1.6400 as measured in the direction perpendicular to a main orientation axis in an in-plane direction of the film. When the refractive index (nβ) of the polyester film is more than 1.6400, the change in orientation angle of the film tends to vary to a large extent, so that the suitable inspection for the polarizing plate may be undesirably impaired. Further, since formation of voids by the particles tends to occur remarkably, the voids are likely to be noticed as luminescent spots, so that the inspection therefor may be undesirably impaired.

The total thickness of the film according to the present invention is not particularly limited as long as the film can be still formed with a suitable shape, and is usually 4 to 100 µm and preferably 9 to 50 µm.

Next, the process for producing the film according to the present invention is explained in detail below. However, the following production process is only illustrative and not intended to limit the scope of the present invention.
First, the preferred process for producing a polyester used in the present invention is explained below. In the below-exemplified process, although polyethylene terephthalate is used as the polyester, it should be noted that the production conditions may vary depending upon kind of polyester used. According to an ordinary method, terephthalic acid is esterified with ethylene glycol, or dimethyl terephthalate is transesterified with ethylene glycol, thereby obtaining an ester reaction product. Next, the thus obtained reaction product is transferred to a polymerization vessel, heated therein while reducing a pressure, and finally heated under vacuum to 280°C to conduct a polymerization reaction thereof, thereby obtaining the aimed polyester.

Next, polyester chips produced by drying the above obtained polyester by any known methods are fed to a melting extruder and heated to a temperature not lower than a melting point of the polymer to thereby melt the polyester chips. Next, the thus obtained molten polymer is extruded through a die on a rotary cooling drum, and rapidly cooled to a temperature not higher than a glass transition temperature thereof and then solidified, thereby obtaining a substantially amorphous non-oriented sheet. In this case, in order to enhance a flatness of the sheet, it is preferred to improve adhesion between the sheet and the rotary cooling drum. For this purpose, in the present invention, an electrostatic adhesion method and/or a liquid coating adhesion method are preferably used. In the present invention, the thus obtained sheet is biaxially stretched to form a stretched film.
More specifically, the stretching procedure may be conducted under the following conditions. That is, the unstretched sheet is stretched in a longitudinal direction thereof at a temperature of 70 to 145°C and a stretch ratio of 2 to 6 times to form a longitudinally monoaxially stretched film, and then the monoaxially stretched film is stretched in a lateral direction thereof at a temperature of 90 to 160°C and a stretch ratio of 2 to 6 times to form a biaxially stretched film. The resulting biaxially stretched film is further heat-treated at a temperature of 150 to 240°C for 1 to 600 sec. Further, upon the heat treatment, in the maximum heat-treating temperature zone and/or a cooling zone located at an outlet of the heat treatment, the film is preferably subjected to relaxation by 0.1 to 20% in a longitudinal direction and/or a lateral direction thereof. In addition, if required, the thus obtained film may be subjected again to longitudinal and lateral re-stretching steps. Further, the unstretched sheet may be subjected to simultaneous biaxial stretching at an area ratio of 10 to 40 times.

During the stretching step, the polyester film of the present invention may also be subjected to surface treatments by a so-called in-line coating method unless the effects of the present invention are adversely affected. The in-line coating may be performed as follows though not particularly limited thereto. For example, after completion of the first stage stretching but before initiation of the second stage stretching, for the purpose of improving an antistatic property, a slip property and an adhesion property of the film as well as enhancing a secondary processability, a weather resistance and a surface hardness thereof, the film may be subjected to coating treatments with an aqueous solution, a water-based emulsion, a water-based slurry, etc. Also, various coats may be formed on the film by an off-line coating method after production of the film. These coats may be formed on one or both surfaces of the film. The coating material used in the off-line coating method may be a water-based material and/or a solvent-based material, whereas the coating material used in the in-line coating method is preferably a water-based material.

In the case where the polyester film of the present invention is provided thereon with a release layer, a material of the release layer is not particularly limited as long as it has a good mold-releasing property. As the material for the release layer, there may be used either those materials comprising a curable silicone resin as a main component, or modified silicone-type materials obtained by graft-polymerization of silicone with an organic resin such as an urethane resin, an epoxy resin and an alkyd resin. Among these materials, from the standpoint of good mold releasing property, preferred are the materials comprising a curable silicone resin as a main component.

The curable silicone resin usable as the material of the release layer may be of any curing reaction-susceptible type such as a solvent addition type, a solvent condensation type, a solvent ultraviolet-curable type, a solvent-free addition type, a solvent-free condensation type, a solvent-free ultraviolet-curable type and a solvent-free electron beam-curable type.

### Effect of the Invention

In accordance with the present invention, it is possible to provide a polyester film used as a release film for polarizing plates, retardation plates, etc., which is minimized in luminescent spots formed therein, and is capable of enhancing an accuracy of inspection for detection of foreign matters included in the polarizing plate, etc. Therefore, the present invention has a high industrial value.

### BEST MODE FOR CARRYING OUT THE INVENTION

The present invention is described in more detail below by Examples. However, these Examples are only illustrative and not intended to limit the present invention thereto, and they are involved in the scope of the present invention unless the subject matters depart therefrom. Meanwhile, the term "part(s)" used in the following Examples and Comparative Examples represents "part(s) by weight".
Further, various properties used in the present invention were measured by the following methods.

### (1) Measurement of intrinsic viscosity of polyester:

One gram of a polyester was accurately weighed, and mixed with and dissolved in 100 mL of a mixed solvent comprising phenol and tetrachloroethane at a weight ratio of 50:50, and a viscosity of the resulting solution was measured at 30°C.

### (2) Average particle size (d50) and uniformity of particle sizes (d25/d75):

Using a centrifugal precipitation type particle size distribution measuring apparatus "SA-CP3 Model" manufactured by Shimadzu Seisakusho Co., Ltd., the particle size corresponding to a cumulative volume fraction of 50% in equivalent spherical distribution of the particles was measured as an average particle size d50. In addition, the value of a ratio (d25/d75) of a diameter (d25) of the particles corresponding to a cumulative weight fraction of 25% to a diameter (d75) of the particles corresponding to a cumulative weight fraction of 75% when the cumulative weights are respectively calculated from a larger particle diameter side, was determined as a particle size distribution value of the particles.

### (3) Measurement of change in orientation angle in film:

The polyester film was cut into sample films at its positions located every 500 mm from a center of the film towards opposite ends thereof along a width direction of the polyester film as well as at the opposite end positions, and orientation angles of the respective sample films were measured using an automatic birefringence meter "KOBRA-21ADH" manufactured by Oji Keiki Co., Ltd., to determine a change in orientation angle of the film every 500 mm along a width direction thereof. Meanwhile, when calculating the change in orientation angle at the positions including the opposite end positions thereof, if the distance between the sampling positions was less than 500 mm, the change in orientation angle as measured every 500 mm was determined by proportional calculation. Next, the polyester film was cut in a length direction thereof to obtain a film having a length of 3 m. Then, sample films were cut from the polyester film at its total seven positions located every 500 mm as a distance from a center of the film in a width direction thereof along a length direction of the film (including opposite end positions) to determine an orientation angle of each position. Thus, the change in orientation angle every 500 mm in both the width and length directions of the polyester film was measured, and the maximum value of the change in orientation angle was regarded as the change in orientation angle of the polyester film. Upon the measurement, it is important that the orientation angles of all of the sample films were measured on the basis of the same reference axis. The reference axis may be optionally determined.

### (4) Refractive index of film (nβ):

The polyester film was cut into sample films at its positions located every 500 mm from a center of the film towards opposite ends thereof along a width direction of the polyester film as well as at the opposite end positions.
Using an Abbe refractometer manufactured by Atago Co., Ltd., the refractive index values in the direction perpendicular to a main orientation axis in an in-plane direction of the film were measured at the respective positions of the film to obtain an average value thereof as the refractive index nβ.

### (5) Measurement of reflection L value:

The L value was measured by a reflection method according to JIS Z-8722 using a spectrophotometric colorimeter "SE-2000 Model" manufactured by Nippon Denshoku Kogyo Co., Ltd.

### (6) Measurement of haze of film:

The haze of the film was measured using an integrating sphere turbidity meter manufactured by Nippon Denshoku Kogyo Co., Ltd., according to JIS K7105.

### (7) Measurement of image clarity value:

The image clarity value of the film was measured by a transmission method according to JIS K7105 using an image clarity measuring apparatus "ICM-1" manufactured by Suga Test Instruments Co., Ltd. Meanwhile, the image clarity value was the value read out at 0.125 mm as measured by a lattice slit.

### (8) Measurement of Ra:

Using a surface roughness meter "SE3500 Model" manufactured by Kosaka Laboratory Ltd., the surface roughness of the film was measured according to JIS B0601-1994. Meanwhile, the measuring length was 2.5 mm.

### (9) Visual inspection property under reflected light:

The obtained polyester film was coated with a release agent comprising 100 parts of a curable silicone resin "KS-779H" produced by Shin-Etsu Kagaku Co., Ltd., 1 part of a curing agent "CAT-PL-8" produced by Shin-Etsu Kagaku Co., Ltd., and 2200 parts of a mixed solvent comprising methyl ethyl ketone (MEK) and toluene such that a coating amount of the releasing agent was 0.1 g/mm². The resultant coating layer was dried at 170°C for 10 sec to obtain a release film. The thus obtained release film was attached to a polarizing film through an adhesive such that the width direction of the release film was parallel with an orientation axis of the polarizing film to thereby form a polarizing plate. Under the condition using a reflected light of a fluorescent lamp, the thus obtained polarizing plate was visually observed by 10 inspectors to evaluate a visual inspection property of the film under a reflected light according to the following evaluation criteria. Meanwhile, upon the above measurement, the sample film with A4 size was cut from a position of the polyester film corresponding to 50% of the width of the polyester film as measured from an end of the film along the width direction, and subjected to the measurement.

### <Evaluation criteria for visual inspection property under reflected light>

### (Good inspection property)→(Poor inspection property)

⊚>○>Δ>×>××
Among the above evaluation criteria, the levels of ⊚,
○ and Δ are acceptable and usable without practical problems.

### (10) Recognizability of foreign matters under Cross-Nicol:

One surface of the obtained polyester film was coated with a release agent comprising 100 parts of a curable silicone resin "KS-779H" produced by Shin-Etsu Kagaku Co., Ltd., 1 part of a curing agent "CAT-PL-8" produced by Shin-Etsu Kagaku Co., Ltd., and 2200 parts of a mixed solvent comprising methyl ethyl ketone (MEK) and toluene such that a coating amount of the releasing agent was 0.1 g/rom². The resultant coating layer was dried at 170°C for 10 sec to obtain a release film. The thus obtained release film was attached to a polarizing film through a known acrylic adhesive such that the width direction of the release film was parallel with an orientation axis of the polarizing film to thereby form a polarizing plate. Upon producing the polarizing plate, a black metal powder (foreign matters) having a size of not less than 50 µm was included between the adhesive and the polarizing film in an amount of 50 particles per m². On the release film of the thus formed polarizing plate in which the foreign matters were included, another polarizing plate for inspection was overlapped such that the width direction of the release film was perpendicular to an orientation axis of the polarizing plate for inspection. White light was irradiated from the side of the first polarizing plate, and the polarizing plate for inspection was visually observed by 10 inspectors to examine whether or not the foreign matters included between the adhesive and the polarizing film were recognizable, and evaluate the observation results according to the following classification ratings. Meanwhile, the evaluation of the resultant laminated film was carried out on the basis of the value measured at a center position of the film.

### <Classification ratings for recognizability of foreign matters in film>

(Good foreign matter recognizability)→(Poor foreign matter recognizability)
⊚>○Δ>×>×
Among the above classification ratings, the levels of ⊚ and ○ are acceptable and usable without practical problems.

### <Examples and Comparative Examples concerning inventions of the first and second aspects>

### Examples 1a to 6a and Comparative Examples 1a to 3a:

### <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr.
After 4 hr, transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C.
On the other hand, the reaction pressure was gradually reduced from normal pressure until finally reaching 0.3 mmHg. After initiation of the reaction, the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 µm and a particle size distribution value of 1.6 was added to the resulting mixture such that the content of the synthetic calcium carbonate particles based on the polyester was 1% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 µm and a particle size distribution value of 1.9 such that the content of the synthetic calcium carbonate particles based on the polyester was 1% by weight, thereby obtaining a polyester (C). As a result, it was confirmed that the thus obtained polyester (C) had an intrinsic viscosity of 0.63.

### <Production of film>

Mixed raw materials obtained by mixing the polyester (A) chips with the polyester (B) chips and/or the polyester (C) chips at the mixing ratios shown in Tables 1 and 2 were respectively charged as a raw material for outermost layers (surface layers) and a raw material for an intermediate layer into two extruders, and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched under the conditions in which the longitudinal stretch ratio, the longitudinal stretching temperature, the lateral stretch ratio, the lateral stretching temperature and the heat-treating temperature (main crystallization temperature) were controlled to those shown in Tables 1 and 2, thereby obtaining polyester films each having a width of 3000 mm.
As a result, it was confirmed that the thus obtained respective polyester films had a total thickness of 40 µm, and the thicknesses of the respective layers therein were 4 µm, 32 µm and 4 µm. Meanwhile, the film obtained after the stretching and heat treatment in Comparative Example 1a was hardly wound up into a roll owing to an excessively flat surface shape and deteriorated slip property thereof, and further suffered from flaws over a whole surface thereof. As a result, the film of Comparative Example 1a was unacceptable as a commercial product.

**Table 1**

| | Examples | | |
|---|---|---|---|
| | 1a | 2a | 3a |
| Blending ratio between raw materials for surface layers (wt%) | A/C 90/10 | A/C 85/15 | A/B/C 70/20/10 |
| Blending ratio between raw materials for intermediate layer (wt%) | A/C 96/4 | A/C 94/6 | A/B/C 78/8/4 |
| Longitudinal stretch ratio | 2.8 | 2.8 | 2.8 |
| Longitudinal stretching temperature (°C) | 90 | 90 | 90 |
| Lateral stretch ratio | 5.4 | 5.4 | 5.4 |
| Lateral stretching temperature (°C) | 120 | 120 | 120 |
| Main crystallization temperature (°C) | 200 | 200 | 200 |
| Haze (%) | 7.3 | 9.3 | 14.6 |
| Reflection L value | 66.3 | 69.1 | 75.4 |
| nβ | 1.6228 | 1.6245 | 1.6219 |
| Change in orientation angle (°/500 mm) | 1.6 | 1.3 | 1.5 |
| Visual inspection property | ⊚ | ⊚ | ○ |
| Recognizability of foreign matters | ⊚ | ⊚ | ⊚ |

| 4a | 5a | 6a | |
|---|---|---|---|
| Blending ratio between raw materials for surface layers (wt%) | A/B 70/30 | A/C 75/25 | A/C 85/15 |
| Blending ratio between raw materials for intermediate layer (wt%) | A/B 84/16 | A/C 90/10 | A/C 94/6 |
| Longitudinal stretch ratio | 2.8 | 2.8 | 3.3 |
| Longitudinal stretching temperature (°C) | 90 | 90 | 90 |
| Lateral stretch ratio | 5.4 | 5.4 | 4.2 |
| Lateral stretching temperature (°C) | 120 | 120 | 130 |
| Main crystallization temperature (°C) | 200 | 200 | 220 |
| Haze (%) | 17.8 | 14.6 | 11.2 |
| Reflection L value | 76.3 | 73.5 | 71.5 |
| nβ | 1.6220 | 1.6234 | 1.6501 |
| Change in orientation angle (°/500 mm) | 1.5 | 1.4 | 6.1 |
| Visual inspection property | △ | ○ | ○ |
| Recognizability of foreign matters | ○ | ⊚ | △ |

**Table 2**

| | Comparative Examples | | |
|---|---|---|---|
| | 1a | 2a | 3a |
| Blending ratio between raw materials for surface layers (wt%) | A/C 92/8 | A/B 60/40 | A/B 60/40 |
| Blending ratio between raw materials for intermediate layer (wt%) | A/C 97/3 | A/B 90/10 | A/B 84/16 |
| Longitudinal stretch ratio | 2.8 | 2.8 | 2.8 |
| Longitudinal stretching temperature (°C) | 90 | 90 | 90 |
| Lateral stretch ratio | 5.4 | 5.4 | 5.4 |
| Lateral stretching temperature (°C) | 120 | 120 | 120 |
| Main crystallization temperature (°C) | 200 | 200 | 200 |
| Haze (%) | 5.8 | 14.6 | 19.0 |
| Reflection L value | 64.4 | 78.5 | 80.4 |
| nβ | 1.6245 | 1.6311 | 1.6244 |
| Change in orientation angle (°/500 mm) | 1.4 | 1.5 | 1.3 |
| Visual inspection property | - | × | ×× |
| Recognizability of foreign matters | - | ○ | × |

| | | | |
|---|---|---|---|
| Note *The film obtained in Comparative Example 1a had many flaws, and it was therefore not possible to evaluate an inspection property thereof. | | | |

### <Examples and Comparative Examples concerning inventions of the third and fourth aspects>

### Examples 1b to 6b and Comparative Examples 1b to 3b:

### <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr.
After 4 hr, transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C.
On the other hand, the reaction pressure was gradually reduced from normal pressure until finally reaching 0.3 mmHg. After initiation of the reaction, the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 µm was added to the resulting mixture such that the content of the synthetic calcium carbonate particles based on the polyester was 2% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 µm such that the content of the synthetic calcium carbonate particles based on the polyester was 1% by weight, thereby obtaining a polyester (C). As a result, it was confirmed that the thus obtained polyester (C) had an intrinsic viscosity of 0.63.

### <Production of polyester (D)>

The same procedure as defined in the above production of the polyester (B) was conducted except that the particles added were replaced with silica particles having an average particle diameter of 2.2 µm such that the content of the silica particles based on the polyester was 0.6% by weight, thereby obtaining a polyester (D). As a result, it was confirmed that the thus obtained polyester (D) had an intrinsic viscosity of 0.63.

### <Production of film>

Mixed raw materials obtained by mixing the polyester (A) chips with the polyester (B) chips, the polyester (C) chips or the polyester (D) chips at the mixing ratios shown below in Tables 3 and 4 were respectively charged as a raw material for outermost layers (surface layers) and a raw material for an intermediate layer into two extruders, and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 100°C and a stretch ratio of 2.8 times in a longitudinal direction thereof, and then introduced into a tenter where the sheet was preheated and then stretched at 120°C and a stretch ratio of 4.9 times in a lateral direction thereof. Thereafter, the obtained stretched sheet was heat-treated at 190°C for 10 sec, and then relaxed by 10% in a width direction thereof at 180°C, thereby obtaining polyester films each having a width of 3000 mm. As a result, it was confirmed that the thus obtained respective polyester films had a total thickness of 40 µm, and the thicknesses of the respective layers therein were 4 µm, 32 µm and 4 µm.

Meanwhile, the film obtained after the stretching and heat treatment in Comparative Example 1b was hardly wound up into a roll owing to an excessively flat surface shape and deteriorated slip property thereof, and further suffered from flaws over a whole surface thereof. As a result, the film of Comparative Example 1b was unacceptable as a commercial product.

**Table 3**

| | Examples | | | | |
|---|---|---|---|---|---|
| | 1b | 2b | 3b | 4b | 5b |
| Blending ratio between raw materials for surface layers (wt%) | A/C 90/10 | A/C 85/15 | A/C 75/25 | A/B 80/20 | A/B 65/35 |
| Blending ratio between raw materials for intermediate layer (wt%) | A/C 96/4 | A/C 94/6 | A/C 90/10 | A/B 92/8 | A/C 86/14 |
| Image clarity value (%) | 94.8 | 94.1 | 90.0 | 95.7 | 92.1 |
| Ra (nm) | 11.3 | 14.3 | 19.4 | 15.5 | 24.8 |
| Change in orientation angle (°/500 mm) | 1.6 | 1.3 | 1.6 | 1.4 | 1.4 |
| Visual inspection property | ⊚ | ⊚ | ○ | △ | △ |
| Recognizability of foreign matters | ⊚ | ⊚ | ○ | ⊚ | ○ |

**Table 4**

| | Comparative Examples | | |
|---|---|---|---|
| | 1b | 2b | 3b |
| Blending ratio between raw materials for surface layers (wt%) | A/C 92/8 | A/B 60/40 | A/D 75/25 |
| Blending ratio between raw materials for intermediate layer (wt%) | A/C 97/3 | A/B 84/16 | A/D 95/5 |
| Image clarity value (%) | 95.5 | 90.4 | 84.5 |
| Ra (nm) | 9.1 | 27.3 | 20.9 |
| Change in orientation angle (°/500 mm) | 1.4 | 1.3 | 1.5 |
| Visual inspection property | - | × | ⊚ |
| Recognizability of foreign matters | - | ○ | × |

| | | | |
|---|---|---|---|
| Note *The film obtained in Comparative Example 1b had many flaws, and it was therefore not possible to evaluate an inspection property thereof. | | | |

### <Examples and Comparative Examples concerning inventions of the fifth and sixth aspects>

### Examples 1c to 6c and Comparative Examples 1c to 3c: <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr.
After 4 hr, transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C.
On the other hand, the reaction pressure was gradually reduced from normal pressure until finally reaching 0.3 mmHg. After initiation of the reaction, the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 µm was added to the resulting mixture such that the content of the synthetic calcium carbonate particles based on the polyester was 1% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 µm such that the content of the synthetic calcium carbonate particles based on the polyester was 1% by weight, thereby obtaining a polyester (C). As a result, it was confirmed that the thus obtained polyester (C) had an intrinsic viscosity of 0.63.

### <Production of polyester (D)>

The same procedure as defined in the above production of the polyester (B) was conducted except that the particles added were replaced with silica particles having an average particle diameter of 2.2 µm such that the content of the silica particles based on the polyester was 0.6% by weight, thereby obtaining a polyester (D). As a result, it was confirmed that the thus obtained polyester (D) had an intrinsic viscosity of 0.63.

### <Production of film>

Mixed raw materials obtained by mixing the polyester (A) chips with the polyester (B) chips, the polyester (C) chips or the polyester (D) chips at the mixing ratios shown below in Tables 5 and 6 were respectively charged as a raw material for outermost layers (surface layers) and a raw material for an intermediate layer into two extruders, and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 100°C and a stretch ratio of 2.8 times in a longitudinal direction thereof, and then introduced into a tenter where the sheet was preheated and then stretched at 120°C and a stretch ratio of 4.9 times in a lateral direction thereof. Thereafter, the obtained stretched sheet was heat-treated at 190°C for 10 sec, and then relaxed by 10% in a width direction thereof at 180°C, thereby obtaining polyester films each having a width of 3000 mm. As a result, it was confirmed that the thus obtained respective polyester films had a total thickness of 40 µm, and the thicknesses of the respective layers therein were 4 µm, 32 µm and 4 µm.

Meanwhile, the film obtained after the stretching and heat treatment in Comparative Example 1c was hardly wound up into a roll owing to an excessively flat surface shape and deteriorated slip property thereof, and further suffered from flaws over a whole surface thereof. As a result, the film of Comparative Example 1c was unacceptable as a commercial product.

**Table 5**

| | Examples | | | | |
|---|---|---|---|---|---|
| | 1c | 2c | 3c | 4c | 5c |
| Blending ratio between raw materials for surface layers (wt%) | A/C 90/10 | A/C 85/15 | A/C 75/25 | A/B/C 73/20/7 | A/B/C 65/30/5 |
| Blending ratio between raw materials for intermediate layer (wt%) | A/C 96/4 | A/C 94/6 | A/C 90/10 | A/B/C 89/8/3 | A/B/C 86/12/2 |
| Reflection L value | 66.3 | 69.1 | 73.5 | 74.8 | 76.8 |
| Image clarity value (%) | 94.8 | 94.1 | 90.0 | 92.1 | 93.8 |
| Change in orientation angle (°/500 mm) | 1.6 | 1.3 | 1.6 | 1.5 | 1.4 |
| Visual inspection property | ⊚ | ⊚ | ○ | △ | △ |
| Recognizability of foreign matters | ⊚ | ⊚ | ○ | ○ | ⊚ |

**Table 6**

| | Comparative Examples | | |
|---|---|---|---|
| | 1c | 2c | 3c |
| Blending ratio between raw materials for surface layers (wt%) | A/C 92/8 | A/B 60/40 | A/D 75/25 |
| Blending ratio between raw materials for intermediate layer (wt%) | A/C 97/3 | A/B 84/16 | A/D 95/5 |
| Reflection L value | 64.1 | 80.0 | 60.8 |
| Image clarity value (%) | 95.5 | 95.7 | 84.5 |
| Change in orientation angle (°/500 mm) | 1.4 | 1.3 | 1.5 |
| Visual inspection property | - | ×× | ⊚ |
| Recognizability of foreign matters | - | ○ | × |

| | | | |
|---|---|---|---|
| Note *The film obtained in Comparative Example 1c had many flaws, and it was therefore not possible to evaluate an inspection property thereof. | | | |

### <Examples and Comparative Examples concerning inventions of the seventh and eighth aspects>

### Examples 1d to 6d and Comparative Examples 1d to 3d:

### <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C.
On the other hand, the reaction pressure was gradually reduced from normal pressure until finally reaching 0.3 mmHg. After initiation of the reaction, the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 µm was added to the resulting mixture such that the content of the synthetic calcium carbonate particles based on the polyester was 2% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 µm such that the content of the synthetic calcium carbonate particles based on the polyester was 1% by weight, thereby obtaining a polyester (C). As a result, it was confirmed that the thus obtained polyester (C) had an intrinsic viscosity of 0.63.

### <Production of polyester (D)>

The same procedure as defined in the above production of the polyester (B) was conducted except that the particles added were replaced with silica particles having an average particle diameter of 2.2 µm such that the content of the silica particles based on the polyester was 0.6% by weight, thereby obtaining a polyester (D). As a result, it was confirmed that the thus obtained polyester (D) had an intrinsic viscosity of 0.63.

### <Production of film>

Mixed raw materials obtained by mixing the polyester (A) chips with the polyester (B) chips, the polyester (C) chips or the polyester (D) chips at the mixing ratios shown below in Tables 7 and 8 were respectively charged as a raw material for outermost layers (surface layers) and a raw material for an intermediate layer into two extruders, and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 100°C and a stretch ratio of 2.8 times in a longitudinal direction thereof, and then introduced into a tenter where the sheet was preheated and then stretched at 120°C and a stretch ratio of 4.9 times in a lateral direction thereof.
Thereafter, the obtained stretched sheet was heat-treated at 190°C for 10 sec, and then relaxed by 10% in a width direction thereof at 180°C, thereby obtaining polyester films each having a width of 3000 mm. As a result, it was confirmed that the thus obtained respective polyester films had a total thickness of 40 µm, and the thicknesses of the respective layers therein were 4 µm, 32 µm and 4 µm.

Meanwhile, the film obtained after the stretching and heat treatment in Comparative Example 1d was hardly wound up into a roll owing to an excessively flat surface shape and deteriorated slip property thereof, and further suffered from flaws over a whole surface thereof. As a result, the film of Comparative Example 1b was unacceptable as a commercial product.

**Table 7**

| | Examples | | | |
|---|---|---|---|---|
| | 1d | 2d | 3d | 4d |
| Blending ratio between raw materials for surface layers (wt%) | A/C 90/10 | A/C 85/15 | A/B/C 83/10/7 | A/C 70/30 |
| Blending ratio between raw materials for intermediate layer (wt%) | A/C 96/4 | A/C 94/6 | A/B/C 93/4/3 | A/C 88/12 |
| Reflection L value | 66.3 | 69.2 | 74.8 | 76.8 |
| Ra (nm) | 11.3 | 13.9 | 17.8 | 23.1 |
| Change in orientation angle (°/500 mm) | 1.6 | 1.3 | 1.5 | 1.4 |
| Visual inspection property | ⊚ | ⊚ | ○ | △ |
| Recognizability of foreign matters | ⊚ | ⊚ | ○ | ○ |

**Table 8**

| | Comparative Examples | | |
|---|---|---|---|
| | 1d | 2d | 3d |
| Blending ratio between raw materials for surface layers (wt%) | A/C 92/8 | A/B 80/20 | A/D 75/25 |
| Blending ratio between raw materials for intermediate layer (wt%) | A/C 97/3 | A/B 92/8 | A/D 95/5 |
| Reflection L value | 64.4 | 79.7 | 60.8 |
| Ra (nm) | 9.1 | 15.7 | 20.9 |
| Change in orientation angle (°/500 mm) | 1.4 | 1.3 | 1.5 |
| Visual inspection property | - | ×× | ⊚ |
| Recognizability of foreign matters | - | ○ | × |

| | | | |
|---|---|---|---|
| Note *The film obtained in Comparative Example 1d had many flaws, and it was therefore not possible to evaluate an inspection property thereof. | | | |

### <Examples and Comparative Examples concerning inventions of the ninth and tenth aspects>

### Examples 1e to 6e and Comparative Examples 1e to 3e:

### <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr.
After 4 hr, transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C.
On the other hand, the reaction pressure was gradually reduced from normal pressure until finally reaching 0.3 mmHg. After initiation of the reaction, the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 µm was added to the resulting mixture such that the content of the synthetic calcium carbonate particles based on the polyester was 2% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 µm such that the content of the synthetic calcium carbonate particles based on the polyester was 1% by weight, thereby obtaining a polyester (C). As a result, it was confirmed that the thus obtained polyester (C) had an intrinsic viscosity of 0.63.

### <Production of polyester (D)>

The same procedure as defined in the above production of the polyester (B) was conducted except that the particles added were replaced with silica particles having an average particle diameter of 2.2 µm such that the content of the silica particles based on the polyester was 0.6% by weight, thereby obtaining a polyester (D). As a result, it was confirmed that the thus obtained polyester (D) had an intrinsic viscosity of 0.63.

### <Production of film>

Mixed raw materials obtained by mixing the polyester (A) chips with the polyester (B) chips, the polyester (C) chips or the polyester (D) chips at the mixing ratios shown below in Tables 9 and 10 were respectively charged as a raw material for outermost layers (surface layers) and a raw material for an intermediate layer into two extruders, and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 100°C and a stretch ratio of 2.8 times in a longitudinal direction thereof, and then introduced into a tenter where the sheet was preheated and then stretched at 120°C and a stretch ratio of 4.9 times in a lateral direction thereof. Thereafter, the obtained stretched sheet was heat-treated at 190°C for 10 sec, and then relaxed by 10% in a width direction thereof at 180°C, thereby obtaining polyester films each having a width of 3000 mm. As a result, it was confirmed that the thus obtained respective polyester films had a total thickness of 40 µm, and the thicknesses of the respective layers therein were 4 µm, 32 µm and 4 µm.

Meanwhile, the film obtained after the stretching and heat treatment in Comparative Example 1e was hardly wound up into a roll owing to an excessively flat surface shape and deteriorated slip property thereof, and further suffered from flaws over a whole surface thereof. As a result, the film of Comparative Example 1b was unacceptable as a commercial product.

**Table 9**

| | Examples | | |
|---|---|---|---|
| | 1e | 2e | 3e |
| Blending ratio between raw materials for surface layers (wt%) | A/C 90/10 | A/C 85/15 | A/C 75/25 |
| Blending ratio between raw materials for intermediate layer (wt%) | A/C 96/4 | A/C 94/6 | A/C 90/10 |
| Image clarity value (%) | 94.8 | 94.1 | 90.0 |
| Haze (%) | 7.3 | 9.3 | 14.6 |
| Change in orientation angle (°/500 mm) | 1.6 | 1.3 | 1.6 |
| Visual inspection property | ⊚ | ⊚ | ○ |
| Recognizability of foreign matters | ⊚ | ⊚ | ○ |

**Table 9 (continued)**

| | Examples | | |
|---|---|---|---|
| | 4e | 5e | 6e |
| Blending ratio between raw materials for surface layers (wt%) | A/B 80/20 | A/B 80/20 | A/B/C 83/7/10 |
| Blending ratio between raw materials for intermediate layer (wt%) | A/B 94/6 | A/B 93/7 | A/B/C 93/3/4 |
| Image clarity value (%) | 96.1 | 95.7 | 94.4 |
| Haze (%) | 14.6 | 17.9 | 12.5 |
| Change in orientation angle (°/500 mm) | 1.5 | 1.3 | 1.5 |
| Visual inspection property | △ | △ | ○ |
| Recognizability of foreign matters | ⊚ | ⊚ | ⊚ |

**Table 10**

| | Comparative Examples | | | |
|---|---|---|---|---|
| | 1e | 2e | 3e | 4e |
| Blending ratio between raw materials for surface layers(wt%) | A/C 92/8 | A/B 80/20 | A/D 75/25 | A/C 70/30 |
| Blending ratio between raw materials for intermediate layer(wt%) | A/C 97/3 | A/B 92/8 | A/D 95/5 | A/C 90/10 |
| Image clarity value (%) | 95.5 | 95.5 | 84.5 | 87.9 |
| Haze (%) | 5.8 | 19.0 | 2.5 | 1635 |
| Change in orientation angle (°/500 mm) | 1.4 | 1.3 | 1.5 | 1.4 |
| Visual inspection property | - | ×× | ⊚ | △ |
| Recognizability of foreign matters | - | ○ | × | △ |

| | | | | |
|---|---|---|---|---|
| Note *The film obtained in Comparative Example 1e had many flaws, and it was therefore not possible to evaluate an inspection property thereof. | | | | |

### INDUSTRIAL APPLICABILITY

The film of the present invention can be suitably used as a polyester film for a release film which is capable of realizing a high inspection accuracy of a polarizing plate when subjected to various inspection methods.

## Claims

1. A polyester film for a release film for a polarizing plate, having a haze of 7 to 18% and an L value of not more than 77 as measured by a reflection method.

2. A laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has a haze of 7 to 18% and an L value of not more than 77 as measured by a reflection method.

3. A polyester film for a release film for a polarizing plate, having a surface roughness (Ra) of 11 to 25 nm and an image clarity value of not less than 90%.

4. A laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has a surface roughness (Ra) of 11 to 25 nm and an image clarity value of not less than 90%.

5. A polyester film for a release film for a polarizing plate, having an L value of 65 to 77 as measured by a reflection method, and an image clarity value of not less than 90%.

6. A laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has an L value of 65 to 77 as measured by a reflection method, and an image clarity value of not less than 90%.

7. A polyester film for a release film for a polarizing plate, having an L value of 65 to 77 as measured by a reflection method, and a surface roughness (Ra) of 11 to 25 nm.

8. A laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has an L value of 65 to 77 as measured by a reflection method, and a surface roughness (Ra) of 11 to 25 nm.

9. A polyester film for a release film for a polarizing plate, having a haze of 7 to 18% and an image clarity value of not less than 90%.

10. A laminate having improved polarization characteristics, comprising a polarizing plate, a retarded polarizing plate or a retardation plate; an adhesive layer formed on one surface of the polarizing plate, the retarded polarizing plate or the retardation plate; and a release film comprising a transparent biaxially oriented polyester film as a base film which is formed on a surface of the adhesive layer, in which the laminate is configured such that (1) a direction of a width of the biaxially oriented polyester film in the release film is the same as a direction of an orientation axis of the polarizing plate, the retarded polarizing plate or the retardation plate, or both the directions make an angle of 90° therebetween; and (2) the biaxially oriented polyester film in the release film has a haze of 7 to 18% and an image clarity value of not less than 90%.
